# EUROPEAN PATENT SPECIFICATION

(11) **EP 0 782 096 B1**
(45) Date of publication and mention of the grant of the patent: **16.04.2008**
(21) Application number: 96120901.2
(22) Date of filing: 27.12.1996
(51) Int. Cl.: G07B 17/00

(54) **Method and apparatus for printing an image indicative of value such as a postal indicia**
Verfahren und Vorrichtung zum Drucken eines einen Wert darstellenden Bildes, wie zum Beispiel eines Postzeichens
Méthode et appareil pour imprimer une image indiquant une valeur, telle que des symboles postaux

(30) Priority: 27.12.1995 US 579504; 27.12.1995 US 579505
(43) Date of publication of application: 02.07.1997
(73) Proprietor: PITNEY BOWES INC., Stamford, CT 06926-0700 (US)
(72) Inventor: Hayashi, Yasuhiro, Anyjo-City Aichi (JP); Tsuru, Yoshio, Kani-City Gifu (JP); Kawahara, Yuji, Nagoya-City Aichi (JP)
(74) Representative: Avery, Stephen John

(56) References cited:
- DE-A- 3 125 426
- US-A- 5 038 153
- US-A- 5 467 709

## Description

This invention relates to printing an image indicative of value (such as a postal indicia) utilizing multiple passes between a printing mechanism and a recording medium.

Traditional postage meters imprint an indicia on a mailpiece or a label to be subsequently placed on a mailpiece as evidence that postage has been paid. These traditional postage meters create the indicia using platen/ink die or a rotary drum/impression roller combinations which are moved into contact with the mailpiece to print the indicia thereon. While traditional postage meters have performed admirably over time, they are limited by the fact that if the indicia image significantly changes, a new platen/ink die or rotary drum/impression roller will have to be produced and placed in each meter. Accordingly, newer postage meters now take advantage of modern digital printing technology to overcome the deficiencies of traditional meters. The advantage of digital printing technology is that since the digital printhead is software driven, all that is required to change an indicia image is new software. Thus, the flexibility in changing indicia images or adding customized advertising slogans is significantly increased.

Modem digital printing technology includes thermal ink jet (bubble jet), piezoelectric ink jet, thermal transfer printing, and LED and laser xerographic printing which all operate to produce images in a dot-matrix pattern. In dot-matrix ink jet printing, individual print elements in the printhead such as resistors or piezoelectric elements are either electronically stimulated or not stimulated to expel or not expel, respectively, drops of ink from a reservoir onto a substrate. By controlling the timing of the energizing of each of the individual print elements in conjunction with the relative movement between the printhead and the mailpiece, a dot-matrix pattern is produced in the visual form of the desired postage indicia image.

With regard to a postage indicia, there is a need to produce an indicia image which is visually appealing and clearly readable. The indicia image must have a relatively high optical density. That is, the density of the individual dots produced by the printhead must be sufficiently high. Moreover, it is desirable that the optical density of the indicia image is sufficient enough so that the indicia image is readable using conventional optical character reader (OCR) equipment. Furthermore, when a mailpiece having an indicia image thereon is processed by, for example, the United States Postal Service (USPS), it must be detected by a conventional facer/canceler machine in order to distinguish it from both stamped mailpieces and mailpieces without a stamp or indicia thereon. The facer/canceler machine typically detects a mailpiece having an indicia by exposing the printed indicia to ultraviolet lamps and then measuring the amount of radiated light emitted back by the indicia ink. If the measured radiated light exceeds a predetermined level, the mailpiece is identified as an indicia (metered mail) and is subsequently processed to an appropriate station for further handling. It is to be noted that in the United States the indicia ink is a fluorescent ink. However, in other countries the indicia ink may be a phosphorescent ink which also emits radiated light when exposed to ultraviolet lamps such that these phosphorescent indicia can also be identified by detecting the amount of radiated light emitted therefrom. Therefore, if an indicia image is to be produced digitally in a dot-matrix pattern, the density of the individual ink dots must be sufficient to allow the fluorescence (or phosphorescence) of the indicia ink to be detected by the facer/canceler as discussed above.

In producing a dot-matrix image using a digital printhead, the individual dots in the matrix are often defined according to their relative density in two directions. That is, the dots will have a certain density (expressed as dots per inch (dpi)) in the direction of relative movement between the printing mechanism and the recording medium as well as a density in a direction perpendicular thereto, which perpendicular density is a function of the pitch (spacing) between each of the individual nozzles in the printhead. In the case of a very simple printhead having a single row of nozzles, the density of the dot-matrix pattern in the direction of relative movement between the printhead and the recording medium is dependent upon the speed of the relative movement between the printhead and the recording medium and the frequency at which the nozzles are energized. In the direction perpendicular to the relative movement, if a desired high dot density is required, the pitch between individual nozzles in the row of nozzles has to be precisely defined to result in the desired dot density. That is, the density of the nozzles themselves must be very high. As an alternative to using a printhead having a high nozzle density, a printhead could be used having two adjacent rows of nozzles that are offset from each other to obtain the desired dot density in the direction perpendicular to the relative movement of the printhead and recording medium. In this printhead configuration, the energizing timing of the nozzles in the two adjacent rows would have to be delayed relative to each other to allow individual columns of the indicia image to be created with the desired dot density. In yet another alternative, a plurality of printheads which are appropriately aligned could also be utilized to produce the desired dot density.

Each of the above-mentioned ways of producing the indicia image has serious limitations. With respect to using a single printhead having only a single row of nozzles, the complexity of producing a printhead which has the required nozzle density and is capable of printing the full height of the indicia image in a single pass of the printhead significantly drives up the cost of the printhead due to the complexity of manufacturing such a printhead which results in low manufacturing yields. In the case of using two adjacent rows of nozzles which are offset from each other, the manufacturing costs associated therewith is also relatively high and additional complexity is added to the meter electronics in order to control the delayed energizing of each of the nozzles in each of the rows to accurately produce the image without any noticeable shift in or misalignment of the indicia image. Finally, if a plurality of aligned printheads are used, the overall cost of the printing mechanism is obviously increased since two printheads are required versus one. Furthermore, as in the case of the adjacent rows of nozzles discussed above, the complexity of the electronics is increased to control the energizing sequence of the nozzles in the two printheads.

US 5,038,153 discloses a franking machine with an inkjet printer wherein the inkjet nozzles are offset in the travel direction of the piece of mail as well as transversely thereto. Due to the offsetting, the ink drop dots can be applied to a piece of mail in partially overlapping fashion and adjoining one another without gaps. In a preferred embodiment, the inkjet nozzles are arranged in equidistant columns perpendicular to the travel direction and in likewise equidistant rows oblique to the travel direction.

US 5,467,709 discloses a mailing machine in which a digital printing device, preferably of the ink jet type, is mounted for movement between one of two printing positions, in one of which the printing device will print a postage indicia direction on envelopes being fed through the mailing machine, and in the other of which the printing device prints the postage indicia on a strip of tape which is extracted from the mailing machine and affixed to an envelope which is incapable of being fed through the mailing machine. There is also a third position for the printing device which is a maintenance position to which the printing device is moved after each or some other predetermined number of printing cycles for the purpose of cleaning the ink ejecting portion of the printing device and/or maintaining a suitable high ink solvent vapor atmosphere adjacent to the ink ejecting portion of the printing device.

DE 31 25 426 A1 discloses matrix printers wherein dot generation elements in the print head, which are arranged like a matrix, are activated in a way so that selected characters or symbols are created during a relative movement between this print head and a recording medium. In this connection, to create high quality characters, i.e. characters having preferably continuous character lines, a high concentration of dots is necessary. This, in return, asks for a corresponding number of dot generation elements, whereby the print head gains rather big dimensions and is too pricey for regular corresponding machines. According to the system in DE 31 25 426 A1, the number of dot generation elements is reduced in as much as the dot generation elements create coarsely screened characters longitudinally of the printed line on a first throughput, and on a following second throughput the coarsely screened characters are created using the stored dots in the gaps between the dots of the coarsely screened characters. The switching action of the print head between the two throughputs is effected by parallel lifting of the table-track arranged longitudinal of the recording medium, and consequently the print head. This simple control apparatus is cost effective and easy to install, whereby the dimension of the fast moveable print head is not elevated.

### SUMMARY OF THE INVENTION

According to the present invention, there is provided a method for ink jet printing an image indicative of value on a recording medium as set out in Claim 1.

The present invention also provides an apparatus for printing a postal indicia image on a mailpiece as set out in Claim 7.

Optional features are set out in the other claims.

An embodiment provides a method for printing an image indicative of value, such as a postal indicia image, which permits use of low cost printing technology.

### BRIEF DESCRIPTION OF THE DRAWINGS

Figure 1 is a perspective view of a postage meter;
Figure 2 is a perspective view of the structure for moving the printing mechanism within the postage meter of Figure 1;
Figure 3 is a schematic block diagram of the control system of the postage meter of Figure 1;
Figures 4(a), (b), and (c) together show the printing sequence of a representative indicia character;
Figure 5 shows a representative indicia produced by the method of Figure 4; and
Figures 6(a), (b), (c), (d), and (e) together show a method of securely printing an indicia including a water mark.

### BACKGROUND

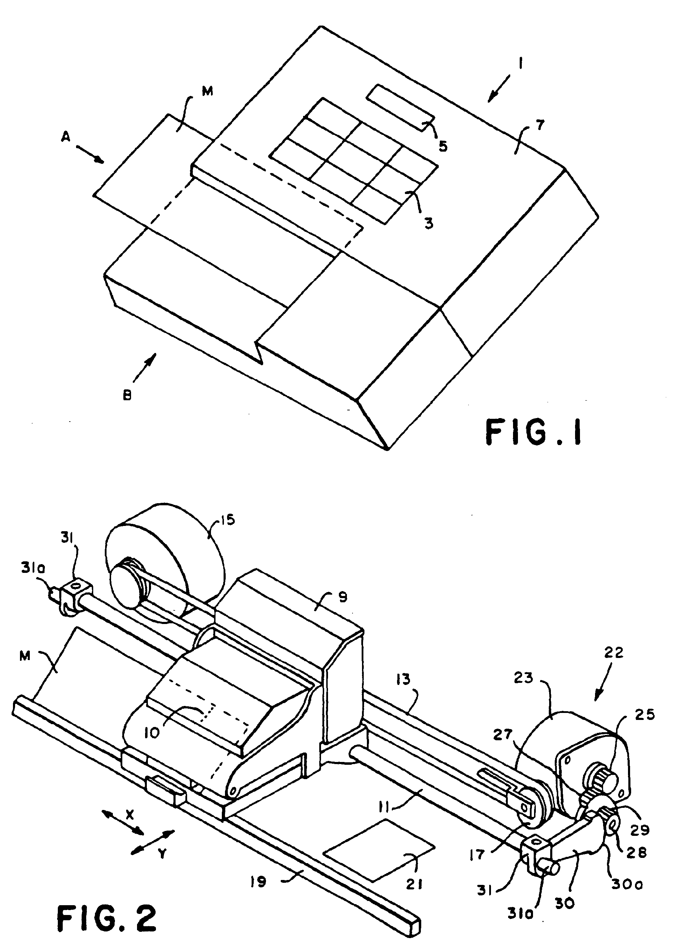

Referring to Figure 1, there is shown a new low cost postage meter 1 having a very small footprint and intended for use in the home or small business environment. Mailpieces "M" (which for the purposes of this application include envelopes, labels, flats, etc.) are fed to the postage meter 1 in either the direction of arrows "A" or "B" until a sensor (not shown), such as a microswitch, is activated by the mailpiece "M" thereby identifying the presence of the mailpiece "M". Upon identification of the mailpiece "M", a printing mechanism 9 (see Figure 2) moves across the stationary mailpiece "M" to print the indicia image as will be discussed in more detail below. Prior to printing, the operator will have entered the postage required via individual keypad buttons 3 and the electronics in the low cost meter will have verified that a particular postage transaction is permissible. Thus, once the transaction has been authorized, detection of the mailpiece "M" by the microswitch triggers movement of the printing mechanism 9. As noted in Figure 1, a display 5 is disposed in a top cover portion 7 of postage meter 1. The display 5 permits the postage meter 1 to visually prompt any required input by the operator and to display the operator's input which has been entered through the keypad buttons 3.

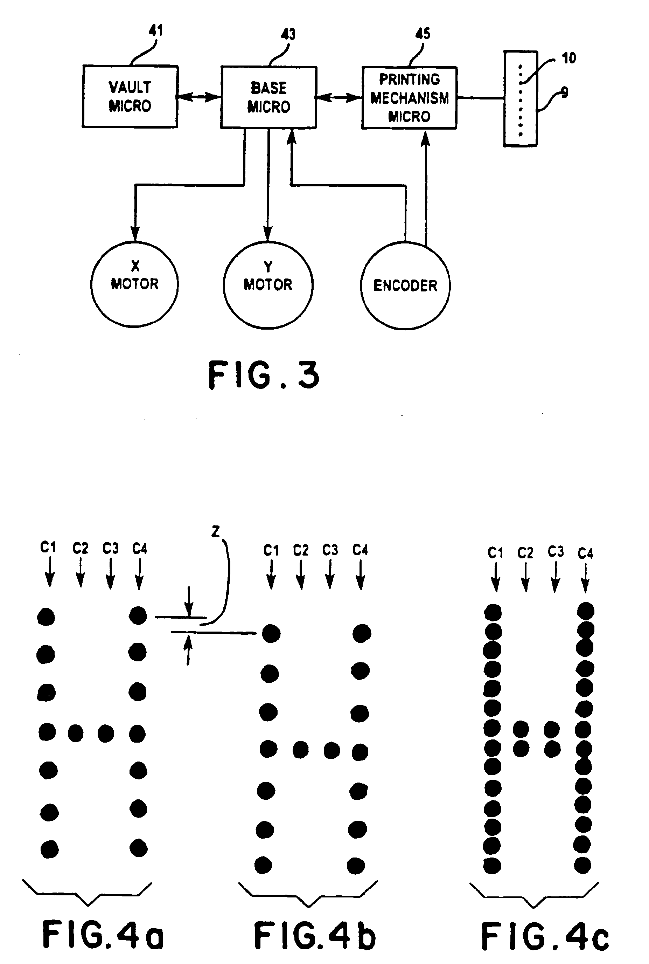

Regarding the movement of the printing mechanism across the mailpiece "M" reference is made to Figure 2. Figure 2 shows a portion of the postage meter 1 which is housed under cover 7 and which permits movement of printing mechanism 9 in the directions of arrows "X" and "Y". Printing mechanism 9 is preferably an ink jet printer having a single row of nozzles 10 arranged transversely to the direction of arrow "X". However, any dot matrix producing printer could be used. Printing mechanism 9 is rotatably mounted on a guide bar 11 and connected to an endless belt 13 driven into rotation by a motor 15. Thus, via the movement of the motor 15 and belt 13, printing mechanism 9 is capable of being moved in a reciprocating manner between the motor 15 and an idler pulley 17. Moreover, the front end of printing mechanism 9 rests on a fixed support surface 19 and slides there along. A maintenance station is shown schematically at 21. The maintenance station 21 is a conventional structure at which purging, wiping and sealing of the nozzles 10 occurs during moments of non-printing. Printing mechanism 9 is positioned at the maintenance station 21 when not being utilized for printing. Thus, when the microswitch detects the presence of the mailpiece "M" in the postage meter 1, a postage meter microcontroller 43 (see Fig. 3) controls the operation of motor 15 to move printing mechanism 9 from maintenance station 21 and across the face of mailpiece "M" to print the postage indicia thereon.

As previously discussed, and in order to make use of a printing mechanism 9 which is a low cost/low nozzle density unit, a plurality of passes of printing mechanism 9 over mailpiece "M" is required in order to produce a postage indicia image having an acceptable density in both the "X" and "Y" directions. The density of the dots in the "X" direction is easily controlled, via the microcontroller 45 (see Fig. 3), by coordinating the movement of printing mechanism 9 via motor 15 in the "X" direction together with the firing frequency of the individual nozzles 10. That is, the slower printing mechanism 9 is moved in the "X" direction for a given nozzle 10 firing frequency, the greater the dot density will be in that direction. With regard to the "Y" direction, printing mechanism 9 must be shifted in the Y direction after each pass of printing mechanism 9 in the "X" direction in order to increase the dot density of the produced indicia image along the "Y" direction.

The preferred structure for moving printing mechanism 9 in the "Y" direction is shifting mechanism 22 which includes a motor 23 operatively engaged to rotate a first gear 25 in either direction, a gear segment 27 which is intermeshed with first gear 25 and fixedly mounted on a shaft 28 that is rotatably mounted in a conventional manner in the postage meter 1, a second gear 29 fixedly mounted on shaft 28 and intermeshed with a shift arm 30 via teeth 30a, and an L-shaped housing structure 31 which is mounted for rotation in a convention manner in postage meter 1 and in which guidebar 11 is eccentrically disposed relative to the center line of a hub portion 31a of housing 31. In a preferred embodiment, housing 31 is a single molded component including shift arm 30. The shifting mechanism 22 works as follows. Once the first pass of printing mechanism 9 in the "X" direction is completed, and it returns to its initial position, motor 23 causes a rotation of housing 31 and shift arm 30 via the gear train 25, 27, 29 and 30a. The rotation of housing 31 causes a corresponding movement of guide rod 11. However, since guide rod 11 is eccentrically mounted relative to the center line of hub 31a (around which housing 31 is forced to rotate) it moves along an arc such that there is a movement of printing mechanism 9 predominately in the "Y" direction. The gear train is designed such that the movement in the "Y" direction is a function of the spacing between the nozzles 10 and the number of passes of the printing mechanism 9 to be made as previously discussed. It should be noted that since the printing mechanism 9 is free to rotate about guide rod 11 while resting on support 19, any upward or downward movement of guide rod 11 is negligible such that the orientation of nozzles 10 relative to mailpiece "M" remains substantially unchanged and does not impact the quality of printing. It is also to be noted that the opposite end of guide rod 11 is mounted in an identical housing 31 which is rotatably mounted in the main side frame of the postage meter 1.

While the synchronization of the moving of printing mechanism 9 with the energizing of nozzles 10 is well known in the art, a brief schematic overview of a postage meter architecture utilizing such principles is shown in Fig. 3. The postage meter 1 includes a vault microprocessor 41, a base microprocessor 43, and a printing mechanism microprocessor 45. Vault microprocessor 41 perform funds accounting, while base microprocessor 43 manages the message interaction between the operator and the postage meter 1 via display 5. In addition, base microprocessor 43 acts as a communication channel between vault microprocessor 41 and printing mechanism microprocessor 45. Postage meter 1 also includes a conventional encoder 47 which provides a signal indicating the "X" position of printing mechanism 9. The encoder signal is used by base microprocessor 43 to control operation of the motors 15, 23 and is used by printing mechanism 45 to synchronize energizing of nozzles 10 with the movement of printing mechanism 9.

Referring to Figures 4(a), 4(b) and 4(c) there is shown in an enlarged view the steps for printing a single letter at a desired vertical dot density utilizing a printing mechanism 9 having a low nozzle density. Figure 4(a) shows the results of a single pass of printing mechanism 9 in producing the letter "H". That is, assuming printing mechanism 9 is moving from left to right in Figure 4(a), it can be energized in a known manner as it moves to produce the letter "H". Assuming, for example and ease of explanation, that there is only a single row of 7 nozzles 10 in printing mechanism 9 and the speed of printing mechanism 9 has been coordinated with the frequency of firing of the nozzles 10 such that individual nozzles 10 are energized when printing mechanism 9 is at any of the column 3 positions C1, C2, C3, and C4. The letter "H" is produced by energizing all of the nozzles 10 when the printing mechanism is at column C1, energizing only the fourth or middle nozzle 10 when the printing mechanism is at columns C2 and C3 and lastly energizing all of the nozzles 10 when the printing mechanism 9 is in the position of column 3 C4. The letter "H" produced during this first pass of printing mechanism 9 has a low dot density. That is, the dots in the vertical or height direction of the letter "H" are fairly well spaced apart such that a large amount of the white background of the paper shows through. In order to improve the visual quality of the letter "H", in this example, a second pass of printing mechanism 9 is made which is complimentary in nature to the first pass. That is, during a second pass of printing mechanism 9, in either the left to right or right to left directions, an identical image of the letter "H" can be produced. The only difference between the first and second letter "H" images is that during the second pass printing mechanism 9 is shifted down by 1/2 of the pitch of the vertical spacing between individual nozzles 10 and therefore correspondingly 1/2 of the spacing between the ink dots of the first image. During the second pass of printing mechanism 9 the nozzles 10 will still be controlled to be energized at columns C1, C2, C3, and C4 just as they were during the first pass such that the dot density in the direction of movement of printing mechanism 9 will not be changed. Figure 4(b) shows that the letter "H" produced during the second pass is shifted by 1/2 the center to center vertical spacing "Z" of the dots of the first image "H". While Figures 4(a) and 4(b) have been shown separately to identify exactly what image is produced during each of the first and second passes of printing mechanism 9, Figure 4(c) shows the finally produced image "H" which is an interlaced combination of the individual "H's" formed during the first and second passes of printing mechanism 9. It is quite clear that the finally produced image "H" has a dot density in the vertical direction which is twice as much as the vertical dot density individually produced during either the first or second passes of printing mechanism 9.

The above procedure can be repeated for additional passes of printing mechanism 9 to further increase the dot density of the finally produced image in the vertical or height direction of the image. Thus, for example, if the finally produced "H" required 3 passes of printing mechanism 9, prior to the second pass printing mechanism 9 would be shifted along the height of the image by 1/3 of the pitch of the nozzles 10 and prior to the third pass printing mechanism 9 would be shifted again by 1/3 of the pitch of nozzles 10 relative to the position of printing mechanism 9 during the second pass thereof. Thus, the spacing of each pass is dependent upon the number of passes and the nozzle pitch.

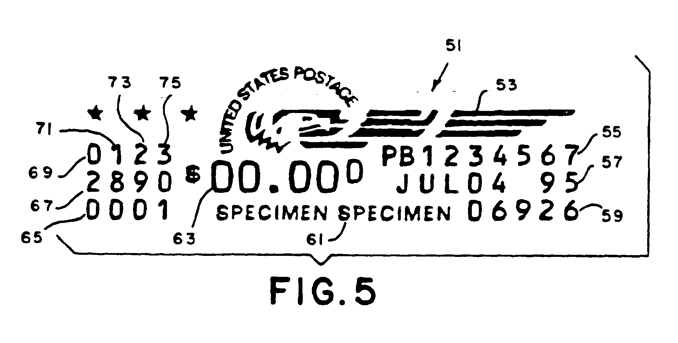

While the above description, for simplicity, was only applied to the printing of a single letter, the Applicants have applied this basic principle to produce a full postal indicia image. Figure 5 shows an enlarged representative example of a typical postage indicia which can be printed by postage meter 1 for use in the United States. The postage indicia 51 includes a graphical image 53 including the 3 stars in the upper left hand corner, the verbiage "UNITED STATES POSTAGE", and the eagle image; a meter identification number 55; a date of submission 57; the originating zip code 59; the originating post office 61, which for the ease of simplicity is just being shown with the words "SPECIMEN SPECIMEN"; the postage amount 63; a piece count 65; a check digits number 67; a vendor I.D. number 69; a vendor token 71; a postal token 73; and a multipass check digit 75. While most of the portions of the indicia image 51 are self explanatory, a few require a brief explanation. The vendor I.D. number identifies who the manufacturer of the meter is, and the vendor token and postal token numbers are encrypted numbers which can be used by the manufacturer and post office, respectively, to verify if a valid indicia has been produced.

The Figure 5 indicia is simply a representative example and the information contained therein will vary from country to country. In the context of this application the terms indicia and indicia image are being used to include any specific requirements of any country.

The Applicants initially utilized a 3 pass approach as described above in connection with Figure 4 for producing the indicia 51. In their initial experiments, the Applicants utilized a printing mechanism 9 having a single column of nozzles which were capable of producing a dot density of 80 dpi. The drop size from each nozzle was approximately 50 pico liters resulting in an average ink dot size deposited on the paper of 4.2 mils in diameter. Thus, for a single column produced by the nozzles 10, approximately 2/3 of the swath area would be ink free. Therefore, to get as close as possible to producing in each column a solid line, three passes of printing mechanism 9 were made in an interlaced relationship to each other. Thus, during a single pass of printing mechanism 9 from either the right to left or left to right direction as viewed in Figure 5, the first pass of printing mechanism 9 produced the indicia image 51 having an indicia height dot density of 80 dpi. Moreover, the movement of printing mechanism 9 was synchronized with the firing frequency of nozzles 10 to produce a density along the length of the indicia image 51 of 240 dots per inch. During the second and third passes of the printing mechanism 9 over the area covered by the indicia 51, printing mechanism 9 was shifted by 1/3 the pitch density of the nozzles 10 to produce a final indicia image 51 which was the combination of 3 interlaced full indicia images. The finally produced indicia image 51 had a dot density of 240 dpi in the height direction of the indicia and a corresponding dot density of 240 dpi in the length direction and was approximately 0.8 inches in height. It is important to note that the three individual indicia images printed during each pass do not have to be an identical dot pattern. Rather, each image printed during each pass appears visually to look like an indicia 51 but their individual dot patterns may differ slightly depending upon the desired dot density and thickness of specific parts of the final combination indicia 51.

### EMBODIMENTS

While the above method produces the indicia 51 which is capable of being read by OCR equipment as well as being detected by the facer/canceler machine, a potential security problem exists in that if someone stacked three envelopes in the postage meter 9 and pulled out one envelope after each pass of printing mechanism 9, three envelopes would be produced each having an indicia image 51 of 240 dpi by 80 dpi. While the density of these individual indicia images would not likely be detected by the facer/canceler machine or be readable by OCR equipment, a risk still exists that all 3 envelopes could be used while the postage meter 1 only accounted for printing of a single indicia. That is, even if the facer/canceler machine did not detect the indicia, the envelopes would simply be passed to another station for a visual inspection. It is quite possible that during the visual inspection the 80 by 240 dpi indicia could be considered as a valid indicia.

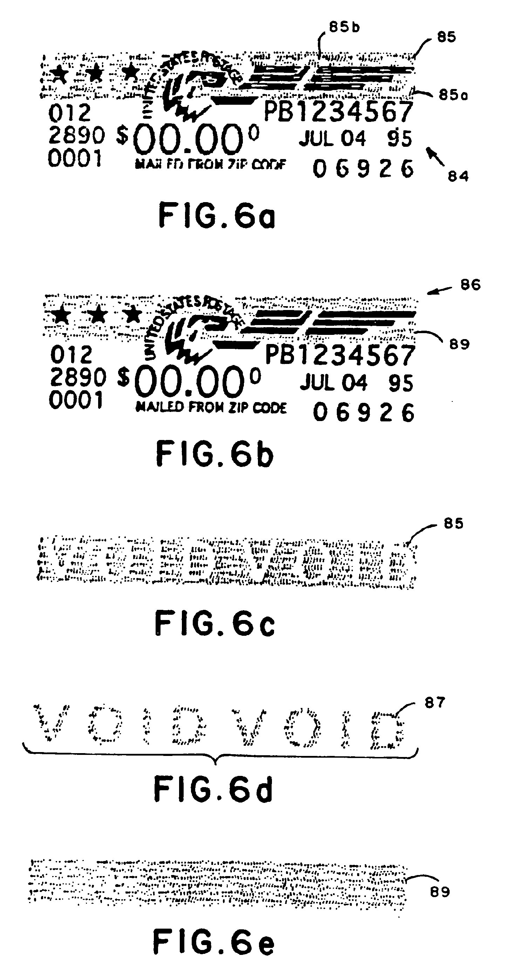

Figures 6(a), (b), (c), (d) and (e) show a modification of the interlaced printing method previously described which overcomes the security problem discussed above. This method includes printing an indicia in only two passes and further requires printing a watermark like area in part or all of the indicia area. That is, during a first pass of printing mechanism 9 indicia 84 is produced having a dot density along its height of 80 dpi and a dot density along its length of 480 dpi. In addition to the indicia 84, a water mark 85 is also produced during the first pass. The water mark 85 includes a plurality of vertical wavy lines 85(a). During the first pass of printing mechanism 9, the watermark 85 is printed so that it does not significantly reduce image contrast thereby allowing the indicia 84 to be clearly visible. However, watermark 85 is sufficiently dense so that a portion thereof 85(b), where there is an absence of ink dots, spells out in large letters a warning such as the word "VOID". Prior to the second pass of printing mechanism 9, it is shifted along the height of indicia 84 by 1/2 the nozzle 10 pitch. Then, during the second pass a full indicia of 80 dpi x 80 dip (not shown) is printed in interlaced relationship with the first produced indicia 84. Moreover, during the second pass of the printing mechanism 9 ink dots are also deposited to fill the "VOID" wording of the water mark 85, essentially eliminating any visual recognition of the word "VOID" to produce the final indicia and watermark image 86 of Fig. 6(b). Accordingly, if two envelopes are stacked together, the indicia image 84 produced after the first pass would have a visual indication that the indicia image 84 is not valid since the watermark 85 contains the word "VOID".

Figures 6(c),and 6(d) respectively show those portions 85, 87 of the final watermark 89 which are produced during the first and second passes, while Figure 6(e) shows the interlaced combination of those two passes.

## Claims

1. A method for ink jet printing an image indicative of value on a recording medium (M), the method comprising the steps of:
A) ink jet printing a dot-matrix pattern of a first one of the image on the recording medium during a first pass between a printing mechanism and the recording medium; and
B) ink jet printing a dot matrix pattern of a second one of the image on the recording medium during a second pass between the printing mechanism and the recording medium, whereby a second one of the image is interlaced with the first one of the image such that a combination of the dot-matrix patterns of the first and second ones of the image result in a combined dot-matrix pattern of the image having a dot density which is greater than an individual dot density of the dot-matrix patterns of the first and second ones of the image,
wherein during ink jet printing of the dot-matrix pattern of the first one of the image a watermark having an area void of ink dots is also printed and during ink jet printing of the dot-matrix pattern of the second one of the image ink dots are printed to fill in the area void of ink dots.

2. A method as recited in claim 1, further comprising ink jet printing during steps A) and B) with a single color ink.

3. A method as recited in claim 1 or 2, further comprising utilizing an ink jet printing mechanism (9) having a single row of nozzles (10) to perform the ink jet printing of steps A) and B) and moving the ink jet printing mechanism (9) and the recording medium (M) relative to each other and substantially perpendicular to the single row of nozzles during the ink jet printing steps A) and B).

4. A method as recited in claim 1, 2 or 3, wherein the first and second ones of the image printed during steps A) and B) and the combined dot-matrix pattern of the image are each a postal indicia.

5. A method as recited in claim 4, wherein the recording medium (M) upon which ink jet printing occurs is a mailpiece.

6. A method as recited in claim 1, wherein the area void of ink dots spells out a warning indicative that the first one of the image is not a valid image.

7. An apparatus for printing a postal indicia image on a mailpiece (M), the apparatus comprising:
a printing mechanism (9) mounted in the apparatus for relative movement between the printing mechanism (9) and the mailpiece (M);
means (22, 45) for controlling relative movement between the printing mechanism (9) and the mailpiece (M) and for printing the postal indicia image as an interlaced combination of a first dot-matrix pattern of the postal indicia image printed on the mailpiece during a first pass between the printing mechanism and the mailpiece and a second dot-matrix pattern of the postal indicia image printed on the mailpiece during a second pass between the printing mechanism (9) and the mailpiece (M), wherein the apparatus is arranged to print a watermark having an area void of ink dots during the first pass and is arranged to print ink dots during the second pass to fill in the area void of ink dots.

8. An apparatus as recited in claim 7, further comprising first means (15) for moving the printing mechanism (9) along a first direction and second means (22) for moving the printing mechanism (9) along a second direction substantially perpendicular to the first direction, and wherein the control means is arranged to control the first means to move the printing mechanism along the first direction to complete the first pass and subsequent to the first pass and prior to the second pass the control means is arranged to control the second means to move the printing mechanism along the second direction.

9. An apparatus as recited in claim 8, wherein the second means includes a guide rod (11) upon which the printing mechanism is mounted, a shift arm (30) mounted for rotation about a centerline in the apparatus, and means for causing the shift arm (30) to rotate about the centerline, and wherein the guide rod (11) is mounted in slaved relationship to the shift arm (30) and eccentric to the centerline such that the guide rod is arranged to move substantially in the second direction together with the printing mechanism during times when the shift arm is rotating.

## Patentansprüche

1. Ein Verfahren für das Tintenstrahl-Drucken eines einen Wert repräsentierenden Bildes auf einem Aufzeichnungs-Medium (M), das Verfahren umfassend die Schritte des:
A) Tintenstrahl-Druckens eines ersten Punktmatrix-Musters des Bildes auf dem Aufzeichnungs-Medium während eines ersten Durchlaufs zwischen einem Druck-Mechanismus und dem Aufzeichnungs-Medium; und
B) Tintenstrahl-Druckens eines zweiten Punktmatrix-Musters des Bildes auf dem Aufzeichnungs-Medium während eines zweiten Durchlaufs zwischen dem Druck-Mechanismus und dem Aufzeichnungs-Medium, wodurch ein zweites Punktmatrix-Muster des Bildes verschränkt wird mit dem ersten Punktmatrix-Muster des Bildes, so dass sich eine Kombination der ersten und zweiten Punktmatrix-Muster des Bildes in einem kombinierten Punktmatrix-Muster des Bildes ergibt, aufweisend eine Punkt-Dichte, welche größer ist als eine individuelle Punkt-Dichte der Punktmatrix-Muster der jeweiligen ersten und zweiten Punktmatrix-Muster des Bildes,
wobei während des Tintenstrahl-Druckens des ersten Punktmatrix-Musters des Bildes auch ein Wasserzeichen gedruckt wird, aufweisend eine von Tintenpunkten freie Fläche, und während des Tintenstrahl-Druckens des zweiten Punktmatrix-Musters des Bildes Tintenpunkte gedruckt werden, um die von Tintenpunkten freie Fläche auszufüllen.

2. Ein Verfahren nach Anspruch 1, außerdem umfassend das Tintenstrahl-Drucken während der Schritte A) und B) mit Tinte nur einer Farbe.

3. Ein Verfahren nach Anspruch 1 oder 2, außerdem umfassend das Verwenden eines Tintenstrahl-Druck-Mechanismus (9), aufweisend eine einzelne Reihe von Düsen (10), um das Tintenstrahl-Drucken der Schritte A) und B) auszuführen, und bewegend den Tintenstrahl-Druck-Mechanismus (9) und das Aufzeichnungs-Medium (M) relativ zueinander und im Wesentlichen senkrecht zu der einzelnen Reihe von Düsen während der Tintenstrahl-Druck-Schritte A) und B).

4. Ein Verfahren nach Anspruch 1, 2 oder 3, wobei die ersten und zweiten während der Schritte A) und B) gedruckten Punktmatrix-Muster des Bildes und das kombinierte Punktmatrix-Muster des Bildes jeweils ein postalischer Freimachungsvermerk sind.

5. Ein Verfahren nach Anspruch 4, wobei das Aufzeichnungs-Medium (M), auf welchem das Tintenstrahl-Drucken stattfindet, eine Postsache ist.

6. Ein Verfahren nach Anspruch 1, wobei die von Tintenpunkten freie Fläche eine Warnung darstellt, anzeigend, dass das erste Punktmatrix-Muster kein gültiges Bild ist.

7. Eine Apparatur für das Drucken eines postalischen Freimachungsvermerk-Bildes auf einer Postsache (M), die Apparatur umfassend:
einen Druck-Mechanismus (9), montiert in der Apparatur für relative Bewegung zwischen dem Druck-Mechanismus (9) und der Postsache (M);
Mittel (22, 45) für das Steuern/Regeln der relativen Bewegung zwischen dem Druck-Mechanismus (9) und der Postsache (M) und für das Drucken des postalischen Freimachungsvermerk-Bildes als einer verschränkten Kombination eines während des ersten Durchlaufs zwischen dem Druck-Mechanismus und der Postsache gedruckten ersten Punktmatrix-Musters des postalischen Freimachungsvermerk-Bildes und einem zweiten Punktmatrix-Muster des postalischen Freimachungsvermerk-Bildes, gedruckt auf die Postsache während eines zweiten Durchlaufs zwischen dem Druck-Mechanismus (9) und der Postsache (M), wobei die Apparatur eingerichtet ist, um ein Wasserzeichen, aufweisend eine von Tintenpunkten freie Fläche, während des ersten Durchlaufs zu drucken und eingerichtet ist, um während des zweiten Durchlaufs Tintenpunkte zu drucken, um die von Tintenpunkten freie Fläche auszufüllen.

8. Eine Apparatur nach Anspruch 7, außerdem umfassend erste Mittel (15) für das Bewegen des Druck-Mechanismus (9) entlang einer ersten Richtung und zweite Mittel für das Bewegen des Druck-Mechanismus (9) entlang einer zweiten im Wesentlichen zu der ersten Richtung senkrechten Richtung, und wobei das Steuerungs/Regelungs-Mittel eingerichtet ist, um das erste Mittel zu steuern, um den Druck-Mechanismus entlang der ersten Richtung zu bewegen, um den ersten Durchlauf zu vollenden und wobei folgend auf den ersten Durchlauf und vor dem zweiten Durchlauf das Steuerungs/Regelungs-Mittel eingerichtet ist, um das zweite Mittel zu steuern, um den Druck-Mechanismus entlang der zweiten Richtung zu bewegen.

9. Eine Apparatur nach Anspruch 8, wobei das zweite Mittel einschließt:
eine Führungsstange (11), auf welcher der Druck-Mechanismus montiert ist;
einen Verstell-Arm (30), montiert für Rotation um eine Zentral-Linie in der Apparatur, und
Mittel, um den Verstellarm (30) zu veranlassen um die Zentral-Linie zu rotieren, und
wobei die Führungsstange (11) in abhängiger Beziehung zu dem Verstell-Arm (30) und exzentrisch zu der Zentral-Linie montiert ist, so dass die Führungsstange eingerichtet ist, um sich zusammen mit dem Druck-Mechanismus im Wesentlichen in der zweiten Richtung während der Zeiten zu bewegen, in welchen der Verstell-Arm rotiert.

## Revendications

1. Procédé d'impression à jet d'encre d'une image représentative d'une valeur sur un support d'enregistrement (M), le procédé comprenant les étapes :
A) d'impression à jet d'encre d'un motif constitué d'une matrice de points d'une première image sur le support d'enregistrement pendant une première passe entre un mécanisme d'impression et le support d'enregistrement ; et
B) d'impression à jet d'encre d'un motif constitué d'une matrice de points d'une deuxième image sur le support d'enregistrement pendant une deuxième passe entre le mécanisme d'impression et le support d'enregistrement, la deuxième image étant entrelacée avec la première image de telle façon qu'une combinaison des motifs constitués de matrices de point des première et deuxième images conduise à un motif constitué d'une matrice de points combiné de l'image ayant une densité de points qui est supérieure à une densité de points individuelle des motifs constitués de matrices de points des première et deuxième images,
dans lequel, pendant l'impression à jet d'encre du motif constitué d'une matrice de points de la première image, un filigrane ayant une zone dépourvue de points d'encre est également imprimé et pendant l'impression à jet d'encre du motif constitué d'une matrice de points de la deuxième image, des points d'encre sont imprimés de façon à remplir la zone dépourvue de points d'encre.

2. Procédé selon la revendication 1, comprenant en outre l'impression à jet d'encre lors des étapes A) et B) en utilisant une encre monocolore.

3. Procédé selon la revendication 1 ou 2, comprenant en outre l'utilisation d'un mécanisme d'impression à jet d'encre (9) ayant une rangée unique de buses (10) pour effectuer l'impression à jet d'encre des étapes A) et B) et le déplacement du mécanisme d'impression à jet d'encre (9) et du support d'enregistrement (M) l'un par rapport à l'autre et sensiblement perpendiculairement à la rangée unique de buses pendant les étapes d'impression à jet d'encre A) et B).

4. Procédé selon la revendication 1, 2 ou 3, dans lequel les première et deuxième images imprimées lors des étapes A) et B) et le motif constitué d'une matrice de points combiné de l'image sont chacune des symboles postaux.

5. Procédé selon la revendication 4, dans lequel le support d'enregistrement (M) sur lequel s'effectue l'impression à jet d'encre est un article de courrier.

6. Procédé selon la revendication 1, dans lequel la zone dépourvue de points d'encre est représentative d'un avertissement indiquant que la première image n'est pas une image valide.

7. Appareil pour imprimer une image de symbole postal sur un article de courrier (M), l'appareil comprenant :
un mécanisme d'impression (9) monté dans l'appareil pour effectuer un mouvement relatif entre le mécanisme d'impression (9) et l'article de courrier (M) ;
un moyen (22, 45) pour commander le mouvement relatif entre le mécanisme d'impression (9) et l'article de courrier (M) et pour imprimer l'image de symbole postal sous la forme d'une combinaison entrelacée d'un premier motif constitué d'une matrice de points de l'image du symbole postal imprimée sur l'article de courrier lors d'une première passe entre le mécanisme d'impression et l'article de courrier et un deuxième motif constitué d'une matrice de points de l'image du symbole postal imprimée sur l'article de courrier lors d'une deuxième passe entre le mécanisme d'impression (9) et l'article de courrier (M), dans lequel l'appareil est conçu pour imprimer un filigrane ayant une zone dépourvue de points d'encre pendant la première passe et est conçu pour imprimer des points d'encre pendant la deuxième passe afin de remplir la zone dépourvue de points d'encre.

8. Appareil selon la revendication 7, comprenant en outre un premier moyen (15) pour déplacer le mécanisme d'impression (9) dans une première direction et un deuxième moyen (22) pour déplacer le mécanisme d'impression (9) dans une deuxième direction sensiblement perpendiculaire à la première direction, et dans lequel le moyen de commande est conçu pour commander le premier moyen afin de déplacer le mécanisme d'impression dans la première direction pour effectuer la première passe et, après la première passe et avant la deuxième passe, le moyen de commande est conçu pour commander le deuxième moyen afin de déplacer le mécanisme d'impression dans la deuxième direction.

9. Appareil selon la revendication 8, dans lequel le deuxième moyen comprend une tige de guidage (11) sur laquelle est monté le mécanisme d'impression, un bras de commande (30) monté de façon à pouvoir tourner autour d'une ligne centrale de l'appareil, et un moyen pour faire tourner le bras de commande (30) autour de la ligne centrale, et dans lequel la tige de guidage (11) est montée de façon asservie au bras de commande (30) et de façon excentrique par rapport à la ligne centrale de façon que la tige de guidage soit amenée à se déplacer sensiblement dans la deuxième direction en association avec le mécanisme d'impression aux moments où le bras de commande est en rotation.
